# EUROPÄISCHE PATENTSCHRIFT

(11) **EP 3 204 182 B1**
(45) Veröffentlichungstag und Bekanntmachung des Hinweises auf die Patenterteilung: **05.12.2018**
(21) Anmeldenummer: 15754166.5
(22) Anmeldetag: 19.08.2015
(51) Int. Cl.: B23K 1/00, B23K 1/06, H05B 3/06, H05B 3/84, B23K 101/36

(54) **VERFAHREN ZUR HERSTELLUNG EINER SCHEIBE MIT ELEKTRISCH LEITFÄHIGER BESCHICHTUNG UND EINEM DARAUF ANGELÖTETEN METALLISCHEN BAND ; ENTSPRECHENDE SCHEIBE**
METHOD OF PRODUCING A PANE WITH ELECTRICALLY CONDUCTIVE COATING AND A METALLIC STRIP SOLDERED THEREON ; CORRESPONDING PANE
PROCÉDÉ DE FABRICATION D'UN DISQUE DOTÉ D'UN REVÊTEMENT ÉLECTROCONDUCTEUR ET D'UNE BANDE MÉTALLIQUE BRASÉE ; DISQUE CORRESPONDANT

(30) Priorität: 07.10.2014 EP 14187874
(43) Veröffentlichungstag der Anmeldung: 16.08.2017
(73) Patentinhaber: Saint-Gobain Glass France, 92400 Courbevoie (FR)
(72) Erfinder: REUL, Bernhard, 52134 Herzogenrath (DE); HERMANGE, Francois, 52074 Aachen (DE)
(74) Vertreter: Gebauer, Dieter Edmund
(86) Internationale Anmeldenummer: PCT/EP2015/068998
(87) Internationale Veröffentlichungsnummer: WO 2016/055208

(56) Entgegenhaltungen:
- EP-A1- 0 612 119
- US-A1- 2005 217 718
- US-A1- 2012 132 251
- US-A1- 2014 138 425

## Beschreibung

Die Erfindung betrifft ein Verfahren zur Herstellung einer Scheibe mit elektrisch leitfähiger Beschichtung und einem darauf angelöteten metallischen Band, eine durch das Verfahren herstellbare Scheibe und deren Verwendung, siehe Oberbegriff der Ansprüche 1, 9 und 12 (siehe, z.B. EP0 612 119 A1).

Es sind Scheiben bekannt mit elektrisch leitfähigen Beschichtungen, welche elektrisch kontaktiert sind. Typischerweise ist die elektrisch leitfähige Beschichtung als aufgedruckte Silberpaste in Streifenform ausgebildet, welche als sogenannte Stromsammelschiene oder Busbar fungiert. Die Stromsammelschiene dient beispielsweise dazu, eine elektrische Spannung an eine auf der Scheibe aufgebrachten leitfähigen Dünnschicht anzulegen, um einen möglichst gleichmäßigen Stromfluss zu erzeugen. Die leitfähige Dünnschicht ist dabei beispielsweise eine beheizbare Beschichtung oder eine Flächenelektrode.

Beispiele für solche Scheiben sind beheizbare Fahrzeugscheiben, insbesondere Windschutzscheiben, Dünnschicht-Solarmodule oder Verglasungen mit elektrisch schaltbaren optischen Eigenschaften, wie beispielsweise elektrochrome Verglasungen. Die Scheibe ist dabei typischerweise mit einer weiteren Scheibe über eine thermoplastische Zwischenschicht zu einem Verbundglas laminiert, wobei die elektrisch leitfähige Beschichtung im Inneren des Verbunds angeordnet ist. Die elektrische Kontaktierung der leitfähigen Beschichtung - also deren Verbindung mit einer externen Spannungsquelle - erfolgt üblicherweise mittels eines metallischen Bandes, beispielsweise eines sogenannten Flachbandleiters oder Folienleiters, welches auf die leifähige Beschichtung aufgelötet ist und über die Seitenkante des Verbundglases hinaus verläuft. Außerhalb des Verbundglases kann das metallische Band mit den Verbindungskabeln zur Spannungsquelle verbunden werden.

Zur Herstellung der Verbindung zwischen elektrisch leitfähiger Beschichtung und metallischem Band ist die Methode des Ultraschall-Lötens (US-Löten) bekannt. Dabei werden über eine Lötspitze Ultraschall-Schwingungen auf das metallische Band übertragen. Durch die Ultraschall-Schwingungen wird eine verbesserte Haftung zwischen der Lotmasse und den Oberflächen erreicht, die zwar zu einer gewissen mechanischen Verbindung führt. Diese ist jedoch häufig nicht hinreichend stabil für den praktischen Einsatz der Scheibe. Daher ist das US-Löten herkömmlicherweise häufig lediglich ein vorbereitender Schritt, bei dem durch die Ultraschall-Schwingungen insbesondere Oxide von der Oberfläche der Lotmasse entfernt werden. Im Anschluss erfolgt das eigentliche Verlöten mittels anderer Lötmethoden, mittels derer die Lotmasse aufgeschmolzen wird. Das US-Löten ermöglicht so insbesondere die Verwendung flussmittelfreier Lotmassen. US-Löten ist beispielsweise in DE19829151C1, DE4432402A1, DE4032192A1 und EP2359973A2 offenbart.

Während das herkömmliche US-Löten zu guten Lötergebnisse führt, erhöht die Notwendigkeit zweier verschiedener Lötschritte den Zeitbedarf für die Herstellung der Scheibe, was für die industrielle Massenfertigung aufgrund der höheren Taktzeiten nicht wünschenswert ist.

EP 0612119 A1 zeigt eine Vorrichtung, bei der ein Kontaktstreifen ein endständiges Loch aufweist, das von Lot durchsetzt wird, das sich auf der Ober- und Unterseite des Kontaktstreifens befindet. US 2014/0138425 A1 zeigt ein US-Lötverfahren, bei dem eine Lötspitze in das Loch eines Kontaktstreifens eingebracht wird. Das Lot wird vor dem Einbringen in das Loch aufgeschmolzen.

Der vorliegenden Erfindung liegt daher die Aufgabe zugrunde, ein verbessertes Verfahren bereitzustellen zur Herstellung einer Scheibe mit elektrisch leitfähiger Beschichtung und einem darauf angelöteten metallischen Band. Insbesondere soll die Lötverbindung zwischen leitfähiger Beschichtung und metallischem Band in einem einzigen Ultraschall-Lötschritt erfolgen.

Die Aufgabe der vorliegenden Erfindung wird erfindungsgemäß durch ein Verfahren zur Herstellung einer Scheibe mit elektrisch leitfähiger Beschichtung und einem darauf angelöteten metallischen Band gemäß Anspruch 1 gelöst. Bevorzugte Ausführungen gehen aus den Unteransprüchen hervor.

Das erfindungsgemäße Verfahren zur Herstellung einer Scheibe mit elektrisch leitfähiger Beschichtung und einem darauf angelöteten metallischen Band ist im Anspruch 1 definiert, und umfasst zumindest die folgenden Verfahrensschritte:
(a) Bereitstellen eines Substrats mit einer elektrisch leitfähigen Beschichtung,
(b) Bereitstellen eines metallischen Bands mit mindestens einem durchgängigen Loch,
(c) Positionieren des metallischen Bands auf der elektrisch leitfähigen Beschichtung, wobei das Loch auf der elektrisch leitfähigen Beschichtung angeordnet wird, und
(d) Verlöten des metallischen Bands mit der elektrisch leitfähigen Beschichtung über eine Lotmasse mittels einer Ultraschall-Lötspitze.

Das metallische Band dient insbesondere der elektrischen Kontaktierung der leitfähigen Beschichtung, also deren Verbindung mit einer externen Spannungsquelle. Das metallische Band, das bevorzugt als Flachleiter ausgebildet ist, erstreckt sich dazu ausgehend von der leitfähigen Beschichtung über die Seitenkante des Substrats hinaus. Grundsätzlich kann das metallische Band aber auch andere Funktionen erfüllen, beispielsweise die Erhöhung der elektrischen Leitfähigkeit der leitfähigen Beschichtung.

In einer bevorzugten Ausführung ist das metallische Band ein Flachleiter (bevorzugt ein Streifen einer metallischen Folie mit einer optionalen isolierenden Ummantelung), welcher bevorzugt zur Verbindung der leitfähigen Beschichtung mit einem externen elektrischen Bauteil (beispielsweise einer Spannungsquelle) dient. Der Flachleiter und über die Seitenkante der Verbundscheibe hinaus.

Das metallische Band ist typischerweise streifenförmig ausgebildet, insbesondere als Streifen einer metallischen Folie. Das metallische Band enthält oder besteht aus einem Metall oder einer Metalllegierung und ist elektrisch leitfähig. Typischer metallische Bänder sind Streifen einer Kupferfolie.

Das metallische Band weist eine Unterseite und eine Oberseite auf. Mit Unterseite wird im Sinne der Erfindung diejenige Seite des metallischen Bands bezeichnet, welche dafür vorgesehen ist, im verlöteten Zustand dem Substrat zugewandt zu sein. Mit Oberseite wird entsprechend diejenige Seite des metallischen Bands bezeichnet, welche dafür vorgesehen ist, im verlöteten Zustand vom Substrat abgewandt zu sein.

Durch das erfindungsgemäße Loch im metallischen Band werden die Ultraschallschwingungen auf die darunter liegende elektrisch leitfähige Beschichtung übertragen, wenn die Ultraschall-Lötspitze über das metallische Band und das Loch bewegt wird. So wird eine Verbindung zwischen Lotmasse und Beschichtung einerseits und Lotmasse und Band andererseits erzeugt, wodurch das Beschichtung und Band über die Lotmasse miteinander verbunden werden. Durch das metallische Band kann darüber hinaus aufgeschmolzene Lotmasse auf die Oberseite des Bandes quellen. Durch die Lotmasse auf der Oberseite wird das Band gleichsam an die Scheibe angedrückt (formschlüssige Verbindung), was zu einer sehr stabilen mechanischen Verbindung führt. Das sind große Vorteile der vorliegenden Erfindung.

In einer bevorzugten Ausführung wird in Verfahrensschritt (b) das metallische Band mit der zumindest auf der Unterseite angeordneten Lotmasse bereitgestellt. In Verfahrensschritt (c) wird die Unterseite dem Substrat zugewandt und die Lotmasse, die auf der Unterseite angeordnet ist, zwischen metallischem Band und elektrisch leifähiger Beschichtung angeordnet. Das vorgefertigte, mit der Lotmasse versehene metallische Band ist vorteilhaft im Hinblick auf eine Massenfertigung. Durch die vor dem Verlöten ideal zwischen leitfähiger Beschichtung und metallischem Band in der Nähe des Lochs angeordnete Lotmasse wird eine effektive und stabile Lötverbindung gewährleistet. Alternativ kann die Lotmasse aber auch separat zwischen leitfähiger Beschichtung und metallischem Band eingelegt werden. Alternativ kann die Lotmasse auch von der Oberseite des Bandes durch das Loch hindurch eingebracht werden, beispielsweise angeordnet auf der Lötspitze.

In einer besonders bevorzugten Ausgestaltung ist Lotmasse sowohl auf der Unterseite als auch auf der Oberseite angeordnet. Das ist besonders vorteilhaft im Hinblick auf die Stabilität der Lötverbindung.

Die Lotmasse kann als Lotmasseportion neben dem Loch angeordnet sein. Das bedeutet, dass die Lotmasse in einem solchen Abstand zum Loch angeordnet ist, dass aufgeschmolzene Lotmasse das Loch erreichen und durch dieses hindurchdringen kann. Es können auch mehrere Lotmasseportionen auf der Unterseite und gegebenenfalls der Oberseite des Bandes angeordnet werden, beispielweise jeweils zwei Lotmasseportionen auf entgegengesetzten Seiten des Loches.

Die Lotmasse kann alternativ als Lotmasseplättchen so auf der Unterseite und gegebenenfalls der Oberseite des Bandes angeordnet sein, dass das Loch abgedeckt wird.

Die Lotmasse kann alternativ auch teilweise in das Loch hineingepresst sein.

Es sind weitere mögliche Anordnungen der Lotmasse auf dem metallischen Band denkbar, die der Fachmann den Erfordernissen des Einzelfalls entsprechend wählen wird.

Durch das erfindungsgemäße Ultraschall-Löten wird eine hinreichend stabile mechanische Verbindung gewährleistet. Bevorzugt wird die endgültige Verbindung mit dem Ultraschall-Löten hergestellt und es findet kein weiterer nachfolgender Lötschritt mit anderen Lötmethoden statt.

Das Substrat enthält in einer bevorzugten Ausgestaltung Glas, insbesondere Kalk-Natron-Glas. Das Substrat kann aber auch andere Glassorten enthalten, beispielsweise Borsilikatglas oder Quarzglas. Das Substrat ist bevorzugt eine Glasscheibe. Das Substrat kann auch Kunststoffe enthalten, insbesondere Polycarbonat oder Polymethylmethacrylat, und als bevorzugt starre polymere Scheibe ausgebildet sein.

Die Dicke des Substrats kann breit variieren und so hervorragend den Erfordernissen im Einzelfall angepasst werden. Vorzugsweise beträgt die Dicke des Substrats von 0,5 mm bis 10 mm und bevorzugt von 1 mm bis 5 mm.

Das Substrat kann klar und farblos, aber auch getönt, getrübt oder gefärbt sein. Das Substrat kann aus nicht vorgespanntem, teilvorgespanntem oder vorgespanntem Glas bestehen.

Das metallische Band wird erfindungsgemäß auf der elektrisch leitfähigen Beschichtung angelötet. Die elektrisch leitfähige Beschichtung ist in einer bevorzugten Ausgestaltung ein silberhaltiger Druck, insbesondere Siebdruck, der durch eine aufgedruckte und teilweise eingebrannte leitfähige Paste ausgebildet ist. Die leitfähige Paste enthält dabei bevorzugt Silberpartikel und Glasfritten. Die elektrisch leitfähige Beschichtung ist bevorzugt eine Stromsammelschiene (*busbar*).

Stromsammelschienen sind dafür vorgesehen, mit einer externen Spannungsquelle verbunden zu werden, so dass ein Strom durch ein zwischen den Sammelschienen angeordnetes Funktionselement fließen kann, beispielsweise durch zwischen den Sammelschienen verlaufende aufgedruckte Heizleiter oder eine zwischen den Sammelschienen angeordnetes leitfähiges Dünnschichtsystem. Die Stromsammelschienen gewährleisten einen gleichmäßigen Stromfluss.

In einer bevorzugten Ausgestaltung ist das Substrat mit einem elektrisch leitfähigen Dünnschichtsystem versehen, auf welches die elektrisch leitfähige Beschichtung als Stromsammelschiene aufgebracht ist. Das Dünnschichtsystem kann beispielsweise eine heizbare Beschichtung sein oder eine Flächenelektrode. Das Dünnschichtsystem kann eine oder mehrere dünne Schichten umfassen. Unter einer dünnen Schicht, oder Dünnschicht, wird üblicherweise eine Schicht mit einer Dicke von kleiner oder gleich 1 µm verstanden. Das elektrisch leitfähige Dünnschichtsystem umfasst mindestens eine elektrisch leitfähige Schicht, beispielsweise enthaltend Silber oder eine elektrisch leitfähiges Oxid (transparent conductive oxide, TCO) wie Indium-Zinn-Oxid (indium tin oxide, ITO). Das Dünnschichtsystem kann zusätzlich dielektrische Schichten aufweisen, die beispielsweise zur Regulierung des Schichtwiderstands, zum Korrosionsschutz oder zur Verminderung der Reflexion dienen. Typische dielektrische Schichten enthalten Oxide oder Nitride, beispielsweise Siliziumnitrid, Siliziumoxid, Aluminiumnitrid, Aluminiumoxid, Zinkoxid oder Titanoxid. Das Dünnschichtsystem kann über dem Fachmann an sich bekannte Methoden auf das Substrat aufgebracht werden, beispielswese physikalische Gasphasenabscheidung (*physical vapour deposition*, PVD), Aufdampfen, magnetfeldunterstützte Kathodenzerstäubung, chemische Gasphasenabscheidung (chemical vapour deposition, CVD), plasmagestützte Gasphasenabscheidung (PECVD) oder durch nasschemische Verfahren.

Das Dünnschichtsystem weist bevorzugt eine kleinere Fläche als das Substrat auf, so dass ein umlaufender Randbereich mit einer Breite von bevorzugt 0,5 mm bis 10 mm nicht mit dem Dünnschichtsystem versehen ist. Das Dünnschichtsystem ist dadurch vor Kontakt mit der umgebenden Atmosphäre geschützt, wenn das Substrat mit einer weiteren Scheibe zu einem Verbundglas laminiert wird.

Grundsätzlich ist es aber auch möglich, ein solches elektrisch leitfähiges Dünnschichtsystem direkt zu kontaktieren, das heißt ohne eine zusätzliche Stromsammelschiene. Das metallische Band wird hierzu direkt auf das Dünnschichtsystem aufgelötet. In diesem Fall ist das Dünnschichtsystem die elektrisch leitfähige Beschichtung im Sinne der Erfindung.

Das metallische Band weist bevorzugt eine Dicke von 10 µm bis 500 µm, besonders bevorzugt von 30 µm bis 200 µm, beispielsweise 50 µm oder 100 µm. Das metallische Band ist bevorzugt als Streifen einer metallischen Folie ausgebildet. Leitfähige Folien mit diesen Dicken sind technisch einfach zu realisieren und weisen eine vorteilhafte Stromtragfähigkeit auf. Die Länge und die Breite des metallischen Bandes können breit variieren und den Erfordernissen des Einzelfalls angepasst werden. Typische Breiten betragen von 2 mm bis 20 mm.

Das metallische Band enthält zumindest ein Metall oder eine Metalllegierung. Das metallische Band enthält bevorzugt Aluminium, Kupfer, verzinntes oder versilbertes Kupfer, Gold, Silber, Zink, Wolfram und/oder Zinn oder Legierungen davon, besonders bevorzugt Kupfer oder Silber. Das metallische Band kann mit einer Beschichtung versehen sein, beispielsweise zur Erhöhung der Leitfähigkeit und als Korrosionsschutz. Das metallische Band ist in einer bevorzugten Ausgestaltung ein verzinntes oder versilbertes Kupferband.

Es können auch mehrere metallische Bänder auf die elektrisch leifähige Beschichtung aufgelötet werden. Das metallische Band oder mehrere metallische Bänder können vorkonfektioniert als sogenannter Flachbandleiter oder Folienleiter mit einer elektrisch isolierenden, polymeren Ummantelung bereitgestellt sein. Die Ummantelung enthält beispielsweise Polyimid, Polyethylennaphthalat (PEN) oder Polyester und weist beispielsweise eine Dicke von 25 µm bis 100 µm auf.

Ein das Loch umgebender Bereich des metallischen Bandes auf der Oberseite und auf der Unterseite ist bevorzugt nicht von der polymeren Ummantelung abgedeckt. Die polymere Ummantelung weist dazu beidseitig jeweils eine Aussparung auf, welche die Bereiche des Bandes als offene Flächen freilassen. Die Fläche der nicht von der Ummantelung abgedeckten Bereiche beträgt bevorzugt von 3 mm² bis 130 mm². Auf der Unterseite wird so eine Lötfläche bereitgestellt, auf dem die Lotmasse vor dem Löten angeordnet werden kann und auf der sich die Lotmasse stabil mit dem metallischen Band verbinden kann. Auf der Oberseite kann durch die Aussparung der Ummantelung hindurch die Lötspitze direkt mit dem metallischen Band in Kontakt gebracht und über das Band bewegt werden. Die Übertragung der Ultraschall-Schwingungen ist so besonders effektiv.

Das Loch im metallischen Band ist ein durchgehendes oder durchgängiges Loch, also eine Öffnung, welche sich von der Oberseite bis zur Unterseite des metallischen Bandes erstreckt. Das Loch kann grundsätzlich jede beliebige Form aufweisen, beispielsweise kreisförmig oder elliptisch. Das metallische Band kann auch mehr als ein Loch aufweisen, beispielsweise zwei nebeneinander eingeordnete Löcher. Die Größe des Loches sollte in zumindest einer Dimension mindestens 1 mm betragen.

In einer bevorzugten Ausgestaltung ist das Loch schlitzförmig ausgebildet. Unter einem Schlitz wird eine ausgeprägt längliche Form des Loches verstanden, wobei die Länge mindestens das 3-fache der Breite beträgt. Der Schlitz weist bevorzugt eine Länge von 1 mm bis 20 mm auf, besonders bevorzugt von 2 mm bis 10 mm.

Die Größe des Loches wird vorteilhafterweise an den Durchmesser der verwendeten Lötspitze angepasst. Bevorzugt ist die Größe des Loches in zumindest einer Dimension größer als der Durchmesser der Lötspritze. Ist das Loch schlitzförmig ausgebildet, so sollte zumindest die Länge des Schlitzes größer sein als der Durchmesser der Lötspritze, beispielsweise etwa doppelt so groß. Damit werden gute Lötergebnisse erzielt. Die Breite des Schlitzes kann auch kleiner sein als der Durchmesser der Lötspritze, beispielsweise etwa halb so groß.

Das Loch kann im metallischen Band durch jedes beliebige Verfahren erzeugt werden, beispielsweise durch mechanisches Zerschneiden oder durch Laserschneiden.

Das Ultraschall-Löten (US-Löten) wird mit einem geeigneten Ultraschall-Lötwerkzeug durchgeführt, bevorzugt einer Ultraschall-Lötspitze. Die Lötspitze überträgt die Ultraschallschwingungen auf das metallische Band, die Lotmasse sowie die elektrisch leitfähige Beschichtung. Die Lötspitze wird dazu mit der Oberseite des metallischen Bands in Kontakt gebracht. Die Lötspitze wird während des Lötens über das metallische Band bewegt, insbesondere über das Loch und die umliegenden Bereich des Bands. Die Bewegung der Lötspitze kann manuell oder automatisiert, beispielsweise mit einem Roboterarm erfolgen. Die Bewegung der Lötspitze führt zu einer effektiven Übertragung der Ultraschallschwingungen entlang der gesamten Lötfläche und damit zu einer besonders stabilen Lötverbindung.

Die Frequenz der Ultraschallschwingungen beträgt bevorzugt von 10 kHz bis 100 kHz, beispielsweise etwa 40 kHz.

Die Lotmasse wird während des Verlötens auf eine Temperatur oberhalb ihrer Schmelztemperatur erwärmt, so dass die Lotmasse aufschmilzt. Dies erfolgt bevorzugt mittels einer beheizbaren Lötspitze, durch die das metallische Band im Lötbereich erwärmt wird. Die Wärme wird vom metallischen Band auf die darunter befindliche Lotmasse übertragen, welche daraufhin aufschmilzt. Die Schmelztemperatur hängt von der verwendeten Lotmasse ab. Die Erwärmung ist auch abhängig von der Wärmeabsorption des metallischen Bandes. Typische Temperaturen, auf das metallische Band beziehungsweise die Lotmasse erwärmt werden, betragen von 120 °C bis 450 °C, bevorzugt 180 °C bis 320°C.

Für das US-Löten geeignete Lotmassen (US-Lotmassen) sind dem Fachmann geläufig und kommerziell erhältlich, beispielsweise von der Firma *MBR ELECTRONICS GmbH* unter dem Markennamen *CERASOLZER.* Beim US-Löten werden Oxide von der Oberfläche der Lotmasse durch die Ultraschallschwingungen entfernt, wodurch die Verwendung eines Flussmittels überflüssig wird. Die Lotmasse enthält daher bevorzugt kein Flussmittel.

Die Lotmasseportion, angeordnet auf der Unterseite des metallischen Bandes vor dem Verlöten, weist bevorzugt eine Dicke von 50 µm bis 150 µm auf. Die Gesamtmenge von Lotmasse hängt von den Gegebenheiten des Einzelfalls ab und kann von Fachmann geeignet gewählt werden. Lotmassenmengen für typische Anwendungen liegen im Bereich von 0,1 mm³ bis 20 mm³.

In einer vorteilhaften Ausführung ist das metallische Band auf der Unterseite mit einem Klebemittel ausgestattet. Durch das Klebemittel kann das metallische Band vor dem Verlöten auf der elektrisch leitfähigen Beschichtung fixiert werden. Dies vereinfacht die genaue Positionierung des metallischen Bandes. Das Klebemittel ist bevorzugt ein Klebeband, besonders bevorzugt ein doppelseitiges Klebeband. Die Dicke des Klebemittels beträgt bevorzugt von 20 µm bis 500 µm, besonders bevorzugt von 25 µm bis 100 µm. Damit werden besonders gute Ergebnisse erreicht.

In einer bevorzugten Ausgestaltung umgibt das Klebemittel das Loch und die auf der Unterseite des metallischen Bandes angeordnete Lotmasse vollständig (in der Ebene des Klebemittels). Wird das metallische Band zum Verlöten auf der elektrisch leitfähigen Beschichtung angeordnet, so wird durch das metallische Band, die elektrisch leitfähige Beschichtung, das Klebemittel und gegebenenfalls die isolierende Ummantelung ein Hohlraum ausgebildet. Der Hohlraum verhindert zum einen unkontrollierten Ausfluss der aufgeschmolzenen Lotmasse während des Lötvorgangs, wodurch eine bessere Lötverbindung erreicht wird. Der Hohlraum verhindert zum anderen, dass Oxide und andere Verunreinigungen, die durch die Ultraschall-Schwingungen von der Lotmasse oder den zu verlötenden Oberflächen abgelöst werden, unkontrolliert über das Substrat verteilt werden. Ist das Substrat mit einer stromtragenden Beschichtung versehen, so kann dies zu Fehlfunktionen führen. Stattdessen werden die Oxide und Verunreinigungen im Hohlraum festgehalten.

Typischerweise wird die erfindungsgemäße Scheibe nach dem Anlöten des metallischen Bandes mit einer weiteren Scheibe zu einer Verbundscheibe verbunden. Dazu werden die erfindungsgemäße Scheibe, mindestens eine thermoplastische Folie und eine weitere Scheibe in dieser Reihenfolge flächendeckend übereinander angeordnet und mittels an sich bekannter Verfahren miteinander laminiert, beispielsweise Autoklavverfahren, Vakuumsackverfahren, Vakuumringverfahren, Kalanderverfahren, Vakuumlaminatoren oder Kombinationen davon. Die Verbindung der Scheiben erfolgt dabei üblicherweise unter Einwirkung von Hitze, Vakuum und/oder Druck. Die elektrisch leitfähige Beschichtung mit dem angelöteten metallischen Band ist auf der zur thermoplastischen Folie hingewandten Oberfläche des Substrats angeordnet.

Das metallische Band ist dabei bevorzugt ein Flachleiter (bevorzugt ein Streifen einer metallischen Folie mit einer optionalen isolierenden Ummantelung), welcher bevorzugt zur Verbindung der leitfähigen Beschichtung mit einem externen elektrischen Bauteil (beispielsweise einer Spannungsquelle) dient. Der Flachleiter erstreckt sich dazu ausgehend von der leitfähigen Beschichtung über die Seitenkante des Substrats hinaus und über die Seitenkante der Verbundscheibe hinaus.

Die elektrisch leitfähige Beschichtung wird bevorzugt durch Siebdrucken auf das Substrat aufgebracht.

Die Erfindung umfasst weiter eine mit dem erfindungsgemäßen Verfahren erhältliche Scheibe.

Die erfindungsgemäße Scheibe mit elektrisch leitfähiger Beschichtung und einem darauf angelöteten metallischen Band ist im Anspruch 9 definiert, und umfasst mindestens:
- ein Substrat mit einer elektrisch leitfähigen Beschichtung,
- ein metallisches Band mit einer dem Substrat zugewandten Unterseite und einer vom Substrat abgewandten Oberseite, das mittels einer Lotmasse auf der elektrisch leitfähigen Beschichtung angebracht ist,
wobei das metallische Band mit einem durchgängigen Loch versehen ist und wobei die Lotmasse auf einem das Loch umgebenden Bereich der Unterseite, innerhalb des Lochs und auf einem das Loch umgebenden Bereichs der Oberseite angeordnet ist.

Gemäß der Erfindung ist zwischen dem Substrat und dem metallischen Band ein Klebemittel, insbesondere doppelseitiges Klebeband angeordnet, welches den auf der Unterseite des metallischen Bandes angeordneten Anteil der Lotmasse und das Loch umgibt. In der Ebene des Klebemittels ist das Loch und der auf der Unterseite des metallischen Bandes angeordneten Anteil der Lotmassen bevorzugt vollständig von dem Klebemittel umgeben.

In einer besonders vorteilhaften Ausgestaltung ist auf dem Substrat ein elektrisch leitfähiges Dünnschichtsystem aufgebracht. Auf dem Dünnschichtsystem ist eine elektrisch leitfähige Beschichtung aufgebracht, welche zwei Stromsammelschienen zum Einbringen elektrischer Energie in das Dünnschichtsystem ausbildet und die eine aufgedruckte elektrische leitfähige Paste, insbesondere silberhaltige Druckpaste enthält. Die Dicke der Stromsammelschienen beträgt bevorzugt von 5 µm bis 50 µm. Auf jeder Stromsammelschiene ist ein metallisches Band erfindungsgemäß aufgelötet. Das metallische Band ist bevorzugt ein Flachleiter, insbesondere ein Streifen einer metallischen Folie, welcher zur Verbindung der leitfähigen Beschichtung/Stromsammelschienen mit einer externen Spannungsquelle dienen.

Die erfindungsgemäße Scheibe ist insbesondere dafür vorgesehen, mit einer weiteren Scheibe zu einer Verbundscheibe laminiert zu werden.

Die Verbundscheibe umfasst mindestens die erfindungsgemäße Scheibe mit elektrisch leitfähiger Beschichtung und darauf angelötetem metallischem Band, eine weitere Scheibe und eine thermoplastische Zwischenschicht, welche die erfindungsgemäße Scheibe und die weitere Scheibe miteinander verbindet. Die elektrisch leitfähige Beschichtung und das angelötete metallische Band sind auf der Oberfläche des Substrats angeordnet, welche der thermoplastischen Zwischenschicht zugewandt ist. Die elektrisch leitfähige Beschichtung - sowie eventuell weitere vorhandene Beschichtungen - sind somit vorteilhaft im Inneren des Laminats vor Korrosion und Beschädigung geschützt. Das metallische Band ist bevorzugt ein Flachleiter zur elektrischen Kontaktierung der leitfähigen Beschichtung mit einem externen elektrischen Bauteil (beispielswiese einer Spannungsquelle) und erstreckt sich dazu ausgehend von der leitfähigen Beschichtung über die Seitenkante der Verbundscheibe hinaus.

Die thermoplastische Zwischenschicht ist bevorzugt durch mindestens eine thermoplastische Folie ausgebildet. Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Zwischenschicht beträgt bevorzugt von 0,2 mm bis 2 mm, besonders bevorzugt von 0,3 mm bis 1 mm, beispielsweise 0,38 mm oder 0,76 mm.

Die Verbundscheibe ist beispielsweise
- eine beheizbare Verbundscheibe, insbesondere beheizbare Windschutzscheibe,
- eine Verglasung mit optisch schaltbaren optischen Eigenschaften, beispielsweise eine elektrochrome Verglasung, eine SPD-Verglasung (*suspended particle device*) oder eine PDLC-Verglasung (*polymer dispersed liquid cristal*), oder
- ein Dünnschichtsolarmodul.

Zwischen den Scheiben können weitere Elemente angeordnet sein, insbesondere wenn die leitfähige Beschichtung als Flächenelektrode oder Stromsammelschiene einer Flächenelektrode fungiert, beispielsweise ein photovoltaisches Schichtsystem oder ein Schichtsystem mit elektrisch schaltbaren optischen Eigenschaften (beispielsweise ein elektrochromes Schichtsystem, PLDC- oder SPD-Schichtsystem).

Die Erfindung umfasst weiter die Verwendung einer erfindungsgemäßen Scheibe in beheizbaren Fensterscheiben oder Verglasungen mit elektrisch schaltbaren optischen Eigenschaften, siehe Anspruch 12.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung der erfindungsgemäßen Scheibe,
- Fig. 2: eine Draufsicht auf die Oberseite O einer erfindungsgemäßen Ausgestaltung des metallischen Bandes vor dem Löten,
- Fig. 3: eine Draufsicht auf die Unterseite U des metallischen Bandes aus Figur 2,
- Fig. 4: einen Schnitt entlang B-B' durch das metallische Band aus Figur 2 und 3,
- Fig. 5: einen Schnitt entlang A-A' durch die Scheibe aus Figur 1 im Bereich des aufgelöteten metallischen Bands 3,
- Fig. 6: einen Schnitt entlang B-B' durch eine weitere Ausgestaltung des metallischen Bands,
- Fig. 7: einen Schnitt entlang B-B' durch eine weitere Ausgestaltung des metallischen Bands,
- Fig. 8: eine Draufsicht auf einen Folienleiter mit metallischem Band,
- Fig. 9: eine Schnitt entlang C-C' durch den Folienleiter aus Figur 6,
- Fig. 10: und Schnitt durch eine weitere Ausgestaltung des metallischen Bandes,
- Fig. 11: ein Flussdiagramm einer Ausführungsform des erfindungsgemäßen Verfahrens.

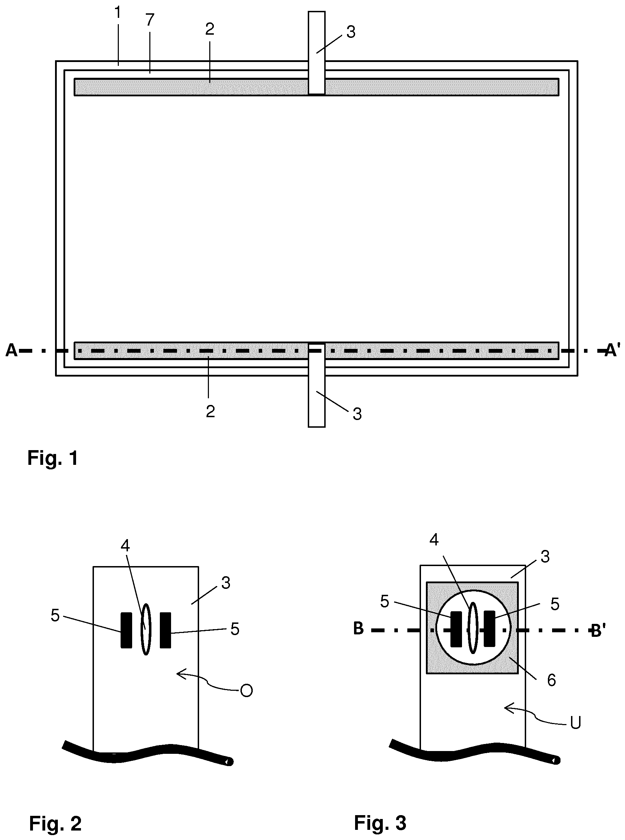

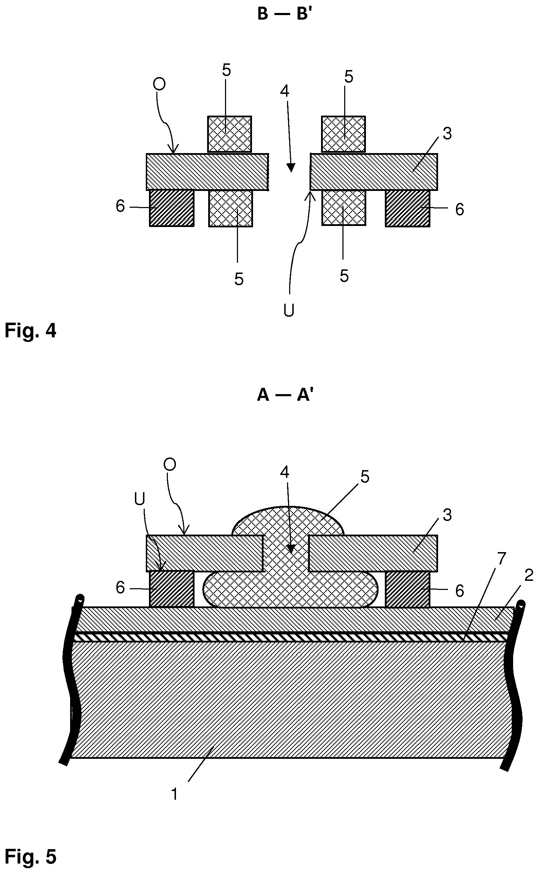

Fig. 1 und Fig. 5 zeigen je ein Detail einer Ausgestaltung der erfindungsgemäßen Scheibe. Die Scheibe umfasst ein Substrat 1, welches beispielsweise eine 2,1 mm dicke Glasscheibe aus Kalk-Natron-Glas ist. Eine Oberfläche des Substrats 1 ist mit einem elektrisch leitfähigen Dünnschichtsystem 7 versehen. Das Dünnschichtsystem 7 enthält beispielsweise zumindest eine elektrisch leitfähige Schicht aus Basis von Indium-Zinnoxid (ITO) und ist als Flächenelektrode einer elektrochromen Verglasung vorgesehen. Ein umlaufender Randbereich des Substrats 1 ist nicht mit dem Dünnschichtsystem 7 versehen. Zur bestimmungsgemäßen Verwendung muss das Dünnschichtsystem 7 mit einer externen Spannungsquelle verbunden werden, so dass der Schaltzustand der elektrochromen Verglasung mittels der angelegten Spannung verändert werden kann. Hierfür ist auf das Dünnschichtsystem 7 eine elektrisch leitfähige Beschichtung 2 aufgebracht. Die Beschichtung 2 bildet zwei Stromsammelschienen entlang zweier gegenüberliegender Seitenkanten des Substrats 1 aus. Die Beschichtung 2 ist eine aufgedruckte und eingebrannte Siebdruckpaste enthaltend Silberpartikel und Glasfritten. Zur Verbindung der Stromsammelschienen mit der externen Spannungsquelle ist auf jede Stromsammelschiene ein metallisches Band 3 angelötet. Das metallische Band 3 ist ein Streifen einer Kupferfolie mit einer Dicke von 50 µm und verläuft von der Beschichtung 2 über die Seitenkante der Scheibe hinaus.

Das metallische Band 3 ist mittels Ultraschall-Löten (US-Löten) auf der Beschichtung 2 angelötet. Das metallische Band 3 weist ein Loch 4 auf, welches durchgängig von seiner Oberseite O zu seiner Unterseite U verläuft. Die Oberseite O ist dabei die vom Substrat 1 abgewandte Oberfläche des Bandes, die Unterseite U die zum Substrat 1 hingewandte Oberfläche des Bandes. Eine für US-Löten geeignete, flussmittelfreie Lotmasse 5 verbindet das Band 3 dauerhaft stabil mit der Beschichtung 2. Die Lotmasse 5 ist zwischen der dem Substrat 1 zugewandten Unterseite U des Bands 3 und der Beschichtung 2 angeordnet, und zwar auf einem das Loch 4 umgebenden Bereich der Unterseite U. Die Lotmasse ist weiter innerhalb des Lochs 4 sowie auf einem das Loch 4 umgebenden Bereich der Oberseite O des Bands 3 angeordnet. Durch diese "pilzartige" Anordnung der Lotmasse 5 wird eine besonders stabile Lötverbindung erreicht. Eine geeignete Lotmasse 5 ist beispielsweise flussmittelfreies In97Ag3.

Auf der Unterseite U des Bands 3 ist ein Klebemittel 6, nämlich ein doppelseitiges Klebeband aufgebracht. Das Klebeband umgibt das Loch 4 und die Lotmasse 5 vollständig. Durch das Klebemittel 6, das Band 3 und das Substrat 1 mit der Beschichtung 2 wird ein Hohlraum gebildet, der lediglich durch das Loch 4 geöffnet ist.

Fig. 2, Fig. 3 und Fig. 4 zeigen je ein Detail eines geeigneten metallischen Bands 3 vor dem Anlöten. Das Band 3 weist ein schlitzförmiges Loch 4 mit einer Länge von 6 mm und einer Breite von 1,5 mm auf. Diese Größe des Loches eignet sich hervorragend zum Verlöten mit einer Lötspitze mit einem Durchmesser von 3 mm. Auf der Unterseite U ist ein doppelseitiges Klebeband als Klebemittel 6 aufgebracht, welches das Loch 4 umgibt. Benachbart zum Loch 4 und innerhalb des vom Klebemittel 6 umgebenen Bereichs sind außerdem zwei Depots einer Lotmasse 5 mit einer Schichtdicke von 100 µm auf der Unterseite U aufgebracht. Die Schichtdicke der Lotmasse 5 entspricht bevorzugt der Dicke des Klebemittels 6. Ist das metallische Band zusätzlich mit einer polymeren Ummantelung versehen, so entspricht die Schichtdicke der Lotmasse 5 bevorzugt der Summe der Dicke des Klebemittels 6 und der Dicke der Ummantelung. Gegenüberliegend sind auf der Oberseite O zwei weitere Lotmasseportionen 5 aufgebracht.

Das Anordnen der Lotmasse 5 sowohl auf der Oberseite O als auch auf der Unterseite U ist vorteilhaft im Hinblick auf die Ausbildung einer "pilzartigen" Lotmasse nach dem Lötvorgang wie in Figur 5 dargestellt.

Zum Löten wird das Band 3 auf die elektrisch leitfähige Beschichtung 2 aufgelegt, so dass die Unterseite U dem Substrat 1 und der Beschichtung 2 zugewandt ist. Beim US-Löten wird eine Lötspitze mit der Oberseite O in Kontakt gebracht und über den zu verlötenden Bereich bewegt. Die Bewegung erfolgt auch über das Loch 4. Durch die Ultraschallschwingungen werden Oxide und Verunreinigungen von der Lotmasse 5 entfernt. Diese können sich nicht unkontrolliert über das Substrat 1 verteilen, sondern werden in dem von Klebemittel 6, Band 3 und Beschichtung 2 gebildeten Hohlraum zurückgehalten. Das ist vorteilhaft im Hinblick auf die Qualität der Beschichtung 2 und insbesondere des Dünnschichtsystems 7, welche durch verteilte Verunreinigungen beeinträchtigt werden würde. Durch die Ultraschallschwingen verbinden sich zudem die Lotmasse mit den Oberflächen von Band 3 und Beschichtung 2, so dass eine mechanische Verbindung hergestellt wird. Wenn die Lotmasse 5 durch Temperaturerhöhung aufgeschmolzen wird, so verhindert das Klebemittel 6 zudem einen unkontrollierten Ausfluss der Lotmasse 5. Stattdessen quillt überschüssige Lotmasse 5 durch das Loch 4 des Bands 3 und bildet so die formschlüssige, "pilzartige" Lotmassenanordnung wie in Figur 5. Die Lötverbindung kann in einem einzigen US-Lötschritt hergestellt werden, ein klassisches Nachlöten mit anderen Lötverfahren ist nicht erforderlich. Das sind große Vorteile der vorliegenden Erfindung.

Fig. 5 zeigt einen Querschnitt durch die Scheibe gemäß Figur 1 mit dem Substrat 1, dem Dünnschichtsystem 7, der leitfähigen Beschichtung 2, dem metallischen Band 3 mit dem Loch 4 und dem Klebemittel 6 sowie der "pilzartig" angeordneten Lotmasse 5.

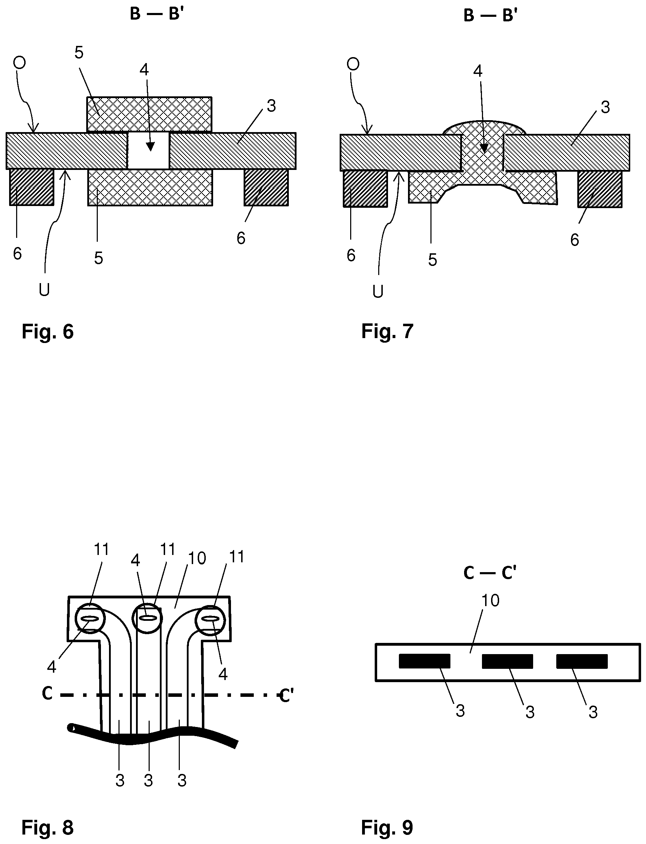

Fig. 6 zeigt einen Querschnitt durch eine weitere Ausgestaltung des erfindungsgemäßen metallischen Bandes 3 mit dem Klebemittel 6 und der Lotmasse 5 vor dem Anlöten. Im Unterschied zur Ausgestaltung der Figur 4 sind die Lotmasseportionen nicht neben dem Loch 4, sondern als Lotmasseplättchen so angeordnet, dass sie das Loch 4 bedecken. Es ist jeweils ein Lotmasseplättchen auf der Unterseite U und auf der Oberseite O des Bands 3 angeordnet. Auch durch diese Anordnung begünstigt die Ausbildung der in Figur 5 "pilzartigen" Lotmasse 5 nach dem Lötvorgang.

Fig. 7 zeigt einen Querschnitt durch eine weitere Ausgestaltung des erfindungsgemäßen metallischen Bandes 3 mit dem Klebemittel 6 und der Lotmasse 5 vor dem Anlöten. Die Lotmasse 5 ist in das Loch 4 hineingepresst und steht sowohl über die Oberseite O als auch über die Unterseite U über. Auch durch diese Anordnung begünstigt die Ausbildung der in Figur 5 "pilzartigen" Lotmasse 5 nach dem Lötvorgang. Durch das Einpressen der Lotmasse 5, beispielsweise mittels einer Zange, wird eine sehr stabile Verbindung zwischen Band 3 und Lotmasse 5 gewährleistet.

Fig. 8 und Fig. 9 zeigen je ein Detail eines vorkonfektionierten Flachbandleiters. Der Flachbandleiter enthält drei metallische Bänder 3, die als Streifen einer Kupferfolie ausgebildet sind, in einer isolierenden Ummantelung 10 aus Kunststoff. Die Ummantelung 10 besteht beispielsweise aus Polyimid und weist beispielsweise eine Dicke von 50 µm auf. Jedes Band 3 ist mit einem schlitzförmigen Loch 4 ausgestattet. Die Ummantelung 11 weist beidseitig, also auf der Oberseite und der Unterseite jeweils eine kreisförmige Aussparung 11 im Bereich jedes Lochs 4 auf. Die Aussparung 11 auf der Unterseite dient der Lötverbindung des Bands 3, die Aussparung 11 auf der Oberseite der Kontaktierung mit der Lötspitze beim Verlöten. Ein Klebemittel 6 wird bevorzugt auf der Ummantelung 10 angeordnet und umgibt die Aussparung 11.

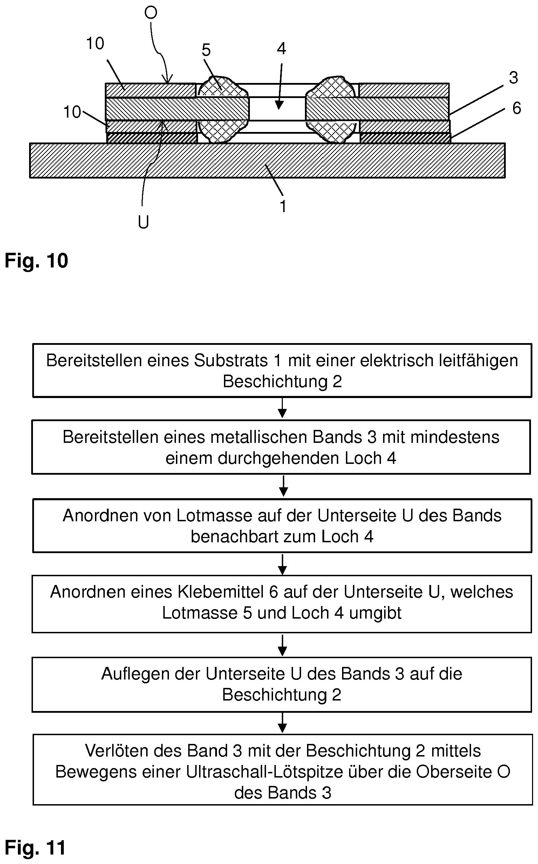

Fig. 10 zeigt einen Querschnitt durch eine weitere Ausgestaltung des metallischen Bandes 3 mit dem Loch 4 vor dem Verlöten. Das metallische Band 3 weist eine polymere Ummantelung 10 mit einer Dicke von 50 µm auf, welche im Bereich um das Loch 4 entfernt ist. Dort ist die Lotmasse 5 auf der Unterseite U und der Oberseite O neben dem Loch aufgebracht. Die polymere Ummantelung 10 auf der Unterseite U ist mittels eines Klebemittels 6 mit einer Dicke von 50 µm auf das Substrat 1 aufgeklebt. Die Dicke der Lotmasse 5 beträgt 100 µm, also der Summe der Dicken von Klebemittel 6 und Ummantelung 10. Die elektrische leitfähige Beschichtung auf dem Substrat 1 ist der Übersichtlichkeit halber nicht dargestellt.

Fig. 11 zeigt ein Flussdiagramm eines Ausführungsbeispiels des erfindungsgemäßen Verfahrens zur Herstellung einer erfindungsgemäßen Scheibe. Eine geeignete Frequenz der Ultraschall-Schwingungen beim Löten ist beispielsweise 40 kHz. Während des Lötens wird die Lotmasse 5 bevorzugt auf eine Temperatur von beispielsweise 315°C erhitzt und dabei aufgeschmolzen.

### Bezugszeichenliste:

- (1): Substrat
- (2): elektrisch leitfähige Beschichtung
- (3): metallisches Band
- (4): Loch im metallischen Band 3
- (5): Lotmasse
- (6): Klebemittel
- (7): elektrisch leitfähiges Dünnschichtsystem
- (10): isolierende Ummantelung von 3
- (11): Aussparung in 10

- O: Oberseite des metallischen Bands 3
- U: Unterseite des metallischen Bands 3

- A-A': Schnittlinie
- B-B': Schnittlinie
- C-C': Schnittlinie

## Patentansprüche

1. Verfahren zur Herstellung einer Scheibe mit elektrisch leitfähiger Beschichtung und einem darauf angelöteten metallischen Band, mindestens umfassend:
(a) Bereitstellen eines Substrats (1) mit einer elektrisch leitfähigen Beschichtung (2),
(b) Bereitstellen eines metallischen Bands (3) mit mindestens einem durchgängigen Loch (4),
(c) Positionieren des metallischen Bands (3) auf der elektrisch leitfähigen Beschichtung (2), wobei das Loch (4) auf der elektrisch leitfähigen Beschichtung (2) angeordnet wird, und
**gekennzeichnet durch** :
(d) Verlöten des metallischen Bands (3) mit der elektrisch leitfähigen Beschichtung (2) über eine Lotmasse (5) mittels einer Ultraschall-Lötspitze, wobei die Ultraschall-Lötspitze mit der Oberseite (O) des metallischen Bands (3) in Kontakt gebracht und im Bereich des Lochs (4) über das metallische Band (3) bewegt wird, und wobei die Lotmasse (5) während des Verlötens durch Erwärmen aufgeschmolzen wird.

2. Verfahren nach Anspruch 1, wobei in Verfahrensschritt (b) das metallische Band (3) mit der zumindest auf der Unterseite (U), bevorzugt auf der Unterseite (U) und der Oberseite (O) angeordneten Lotmasse (5) bereitgestellt wird.

3. Verfahren nach einem der Ansprüche 1 bis 2, wobei das metallische Band (3) auf der Unterseite (U) mit einem Klebemittel (6) ausgestattet ist, welches das Loch (4) und die Lotmasse (5) umgibt, wobei das Klebemittel (6) bevorzugt ein doppelseitiges Klebeband ist.

4. Verfahren nach einem der Ansprüche 1 bis 3, wobei das metallische Band ein Flachleiter zur elektrischen Kontaktierung der elektrisch leitfähigen Beschichtung (2) ist und sich ausgehend von der elektrisch leitfähige Beschichtung (2) über die Seitenkante des Substrats (1) hinaus erstreckt.

5. Verfahren nach einem der Ansprüche 1 bis 4, wobei das Loch (4) schlitzförmig ausgebildet ist.

6. Verfahren nach einem der Ansprüche 1 bis 5, wobei die elektrisch leitfähige Beschichtung (2) eine aufgedruckte leitfähige Paste enthält, bevorzugt umfassend Silberpartikel und Glasfritten.

7. Verfahren nach einem der Ansprüche 1 bis 6, wobei das metallische Band (3) eine Dicke von 10 µm bis 500 µm, bevorzugt von 30 µm bis 200 µm aufweist und bevorzugt zumindest Kupfer oder Silber enthält.

8. Verfahren nach einem der Ansprüche 1 bis 7, wobei das Substrat (1) Glas enthält, insbesondere Kalk-Natron-Glas.

9. Scheibe mit elektrisch leitfähiger Beschichtung und einem darauf angelöteten metallischen Band, mindestens umfassend:
- ein Substrat (1) mit einer elektrisch leitfähigen Beschichtung (2),
- ein metallisches Band (3) mit einer dem Substrat (1) zugewandten Unterseite (U) und einer vom Substrat (1) abgewandten Oberseite (O), das mittels einer Lotmasse (5) auf der elektrisch leitfähigen Beschichtung (2) angebracht ist,
wobei das metallische Band (3) mit einem durchgängigen Loch (4) versehen ist und wobei die Lotmasse (5) auf einem das Loch (4) umgebenden Bereich der Unterseite (U), innerhalb des Lochs (4) und auf einem das Loch (4) umgebenden Bereichs der Oberseite (O) angeordnet ist,
**dadurch gekennzeichnet, dass** :
das Löten durch Ultraschall erzeugt wird, und wobei zwischen dem Substrat (1) und dem metallischen Band (3) ein Klebemittel (6) angeordnet ist, welches den auf der Unterseite (U) angeordneten Anteil der Lotmasse (5) umgibt.

10. Scheibe nach Anspruch 9, wobei das Substrat (1) über eine thermoplastische Zwischenschicht mit einer weiteren Scheibe zu einer Verbundscheibe laminiert ist, wobei die elektrisch leitfähige Beschichtung (2) und das metallische Band (3) auf der der thermoplastischen Zwischenschicht zugewandten Oberfläche des Substrats (1) angeordnet sind und wobei sich das metallische Band (3) ausgehend von der elektrisch leitfähige Beschichtung (2) über die Seitenkante der Verbundscheibe hinaus erstreckt.

11. Scheibe nach einem der Ansprüche 9 bis 10, wobei
- das Substrat (1) ein elektrisch leitfähiges Dünnschichtsystem (7) aufweist,
- auf das Dünnschichtsystem (7) die elektrisch leitfähige Beschichtung (2) aufgebracht ist, welche zwei Stromsammelschienen ausbildet, wobei die elektrisch leitfähige Beschichtung (2) eine aufgedruckte leitfähige Paste enthält,
- auf jede Stromsammelschiene ein metallisches Band (3) mit einem durchgehenden Loch (4) aufgelötet ist, welches ein Flachleiter zur elektrischen Verbindung mit einer externe Spannungsquelle ist, und
- das Substrat (1) über eine thermoplastische Zwischenschicht mit einer weiteren Scheibe zu einer Verbundscheibe laminiert ist.

12. Verwendung einer Scheibe nach einem der Ansprüche 9 bis 11 in beheizbaren Fensterscheiben oder Verglasungen mit elektrisch schaltbaren optischen Eigenschaften.

## Claims

1. Method for producing a pane having an electrically conductive coating and a metallic strip soldered thereon, at least comprising:
(a) Providing a substrate (1) having an electrically conductive coating (2),
(b) Providing a metallic strip (3) having at least one through-hole (4),
(c) Positioning the metallic strip (3) on the electrically conductive coating (2), wherein the hole (4) is arranged on the electrically conductive coating (2), and
**characterized by**:
(d) Soldering the metallic strip (3) to the electrically conductive coating (2) via a soldering compound (5) using an ultrasonic soldering tip, wherein the ultrasonic soldering tip is brought into contact with the top (O) of the metallic strip (3) and is moved over the metallic strip (3) in the region of the hole (4), and wherein the soldering compound (5) is melted by heating during the soldering.

2. Method according to claim 1, wherein in process step (b), the metallic strip (3) having the soldering compound (5) arranged at least on the bottom (U), preferably on the bottom (U) and on the top (O), is provided.

3. Method according to one of claims 1 through 2, wherein the metallic strip (3) is provided with an adhesive (6) on the bottom (U), which adhesive surrounds the hole (4) and the soldering compound (5), wherein the adhesive (6) is preferably a double-sided adhesive tape.

4. Method according to one of claims 1 through 3, wherein the metallic strip is a flat conductor for the electrical contacting of the electrically conductive coating (2) and, starting from the electrically conductive coating (2), extends beyond the side edge of the substrate (1).

5. Method according to one of claims 1 through 4, wherein the hole (4) is configured in the shape of a slit.

6. Method according to one of claims 1 through 5, wherein the electrically conductive coating (2) contains a printed-on conductive paste, preferably including silver particles and glass frits.

7. Method according to one of claims 1 through 6, wherein the metallic strip (3) has a thickness of 10 µm to 500 µm, preferably of 30 µm to 200 µm and preferably contains at least copper or silver.

8. Method according to one of claims 1 through 7, wherein the substrate (1) contains glass, in particular soda lime glass.

9. Pane having an electrically conductive coating and a metallic strip soldered thereon, at least comprising:
- a substrate (1) having an electrically conductive coating (2),
- a metallic strip (3) having a bottom (U) facing the substrate (1) and a top (O) facing away from the substrate (1), which strip is mounted on the electrically conductive coating (2) by means of a soldering compound (5),
wherein the metallic strip (3) is provided with a through-hole (4) and wherein the soldering compound (5) is arranged on a region of the bottom (U) surrounding the hole (4), within the hole (4), and on a region of the top (O) surrounding the hole (4),
**characterized in that**:
the soldering is produced by ultrasonic oscillations, and wherein an adhesive (6) that surrounds the portion of the soldering compound (5) arranged on the bottom (U) is arranged between the substrate (1) and the metallic strip (3).

10. Pane according to claim 9, wherein the substrate (1) is laminated via a thermoplastic intermediate layer to another pane to form a composite pane, wherein the electrically conductive coating (2) and the metallic strip (3) are arranged on the surface of the substrate (1) facing the thermoplastic intermediate layer and wherein the metallic strip (3) extends, starting from the the electrically conductive coating (2), beyond the side edge of the composite pane.

11. Pane according to one of claims 9 through 10, wherein
- the substrate (1) has an electrically conductive thin-film system (7),
- the electrically conductive coating (2) is applied on the thin-film system (7), which forms two current collecting rails, wherein the electrically conductive coating (2) contains a printed-on conductive paste,
- a metallic strip (3) having a through-hole (4) is soldered onto each current collecting rail, which strip is a flat conductor for the electrical connection to an external voltage source, and
- the substrate (1) is laminated via a thermoplastic intermediate layer to another pane to form a composite pane.

12. Use of a pane according to one of claims 9 through 11 in heatable window panes or glazings with electrically switchable optical properties.

## Revendications

1. Procédé de fabrication d'une vitre avec une couche électriquement conductrice sur laquelle est soudé une bande métallique, comprenant au moins:
a) fourniture d'un substrat (1) avec un revêtement conducteur d'électricité (2),
b) fourniture d'une bande métallique (3) avec au moins un orifice (4) traversant (4),
c) positionnement de la bande métallique (3) sur le revêtement conducteur d'électricité (2), où l'orifice (4) est disposé sur le revêtement conducteur d'électricité (2), et **caractérisé par**:
d) la soudure de bande métallique (3) avec le revêtement conducteur d'électricité (2) par une masse de soudure (5) à l'aide d'une panne à souder par ultrasons, où la panne à souder par ultrasons est mise en contact avec la face supérieure (O) de la bande métallique (3) et dans la région de l'orifice (4) est déplacée sur la bande métallique (3), et où la masse de soudure (5) est fondue par chauffage au cours de la soudure.

2. Procédé de fabrication selon la revendication 1, où lors de l'étape b) la bande métallique (3) est pourvu de la masse de soudure (5) disposée au moins sur la face inférieure (U), de préférence sur la face inférieure (U) et la face supérieure (O).

3. Procédé selon l'une des revendications 1 à 2, où la bande métallique (3) est équipée sur la face inférieure (U) d'un adhésif (6), qui entoure le trou (4) et la masse de soudure (5), où l'adhésif (6) est de préférence un ruban double-face.

4. Procédé selon l'une des revendications 1 à 3, où la bande métallique (3) est un fil plat pour le contact électrique du revêtement conducteur d'électricité (2) et s'étend au-delà du bord latéral du substrat (1) à partir du revêtement conducteur d'électricité (2).

5. Procédé selon l'une des revendications de 1 à 4, où l'orifice (4) prend la forme d'une fente.

6. Procédé selon l'une des revendications 1 à 5, où le revêtement conducteur d'électricité (2) contient une pâte conductrice imprimée, comprenant de préférence des particules en argent et des frittes de verre.

7. Procédé selon l'une des revendications 1 à 6, où la bande métallique (3) a une épaisseur de 10 µm à 500 µm, de préférence de 30 µm à 200 µm et qui contient de préférence au moins du cuivre ou de l'argent.

8. Procédé selon l'une des revendications 1 à 7, où le substrat (1) contient du verre, de préférence du verre sodocalcique.

9. Vitre avec un revêtement conducteur d'électricité et une bande métallique soudée sur celui-ci comprenant au moins:
- un substrat (1) avec un revêtement conducteur d'électricité (2),
- une bande métallique (3) avec une face inférieure (U) tournée vers le substrat (1) et une face supérieure (O) détournée du substrat (1), qui est attaché au moyen d'une masse de soudure (5) au revêtement conducteur d'électricité (2),
où la bande métallique (3) est fourni d'un orifice traversant (4) et où la masse de soudure (5) est disposée sur une région de la face inférieure (U), à l'intérieur de l'orifice (4) et sur une région entourant l'orifice (4) de la face supérieure (O),
**caractérisée en ce que** :
la soudure est généré par ultrasons et où
entre le substrat (1) et la bande métallique (3) un adhésif (6) est disposé, qui entoure la part de la masse de soudure (5) disposée sur la face inférieure (U).

10. Vitre selon la revendication 9, où le substrat (1) est stratifié avec une autre vitre pour former une vitre feuilletée par une couche thermoplastique intermédiaire et le revêtement conducteur d'électricité (2) et la bande métallique (3) sont disposées sur la surface du substrat (1) tournée vers la couche thermoplastique intermédiaire et où la bande métallique (3) s'étend au-delà du bord latéral de la vitre feuilletée à partir du revêtement conducteur d'électricité (2).

11. Vitre selon l'une des revendications 9 à 10, où
- le substrat (1) présente un empilement de couches minces (7),
- le revêtement conducteur d'électricité (2) est appliquée sur l'empilement de couches minces (7), qui forme deux barres collectrices de courant, où le revêtement conducteur d'électricité (2) contient une pâte conductrice imprimée,
- une bande métallique (3) avec un orifice traversant (4) est soudé sur chaque barre collectrice de courant, qui est un conducteur plat pour le raccordement électrique avec une source d'alimentation externe, et
- le substrat (1) est stratifié avec une autre vitre pour former une vitre feuilletée par une couche thermoplastique intermédiaire.

12. Utilisation d'une vitre selon l'une des revendications 9 à 11 dans les fenêtres chauffantes ou les vitrages avec des propriétés optiques électriquement commutables.
